# EUROPÄISCHE PATENTANMELDUNG

(11) **EP 3 989 009 A1**
(43) Veröffentlichungstag der Anmeldung: **27.04.2022**
(21) Anmeldenummer: 21206957.9
(22) Anmeldetag: 01.07.2016
(51) Int. Cl.: G04B 17/06, G04B 17/22

(54) **SPIRALFEDER UND VERFAHREN ZU DEREN HERSTELLUNG**

(30) Priorität: 03.07.2015 DE 102015110796; 14.07.2015 DE 102015111359; 17.07.2015 DE 102015111605; 05.08.2015 DE 102015112897
(62) Teilanmeldung aus: 16747909.6
(71) Anmelder: Damasko Präzisionstechnik GmbH & Co. KG, 93053 Regensburg (DE)
(72) Erfinder: MÄNNICKE, Stefan, 93173 Wenzenbach (DE)
(74) Vertreter: Götz, Gudrun Veronika

(57) **Zusammenfassung**

Es ist eine Spiralfeder (4) und ein Verfahren zur Herstellung der Spiralfeder (4) offenbart. Die Spiralfeder (4) besitzt mindestens eine Windung (9), die aus einem massiven Kern (16) aus einem Siliziummaterial (32) besteht. Der Kern (16) umfasst zwei lange, parallele und geradlinige Seiten (22) und zwei kurze parallele und geradlinige Seiten (24_{O}, 24_{U}). Zumindest die gegenüberliegenden langen Seiten (22) des Kerns (16) sind von einer SiO₂ - Schicht (20) bedeckt. Bei dem Verfahren werden die Windungen (9) aus dem Siliziummaterial geätzt, so dass der Kern (16) der mindestens einen Windung (9) der Spiralfeder (4) ausgeformt wird und zwei lange, parallele und geradlinige Seiten (22) und zwei kurze parallele und geradlinige Seiten (24_{O}, 24_{U}) umfasst.

## Beschreibung

Die vorliegende Erfindung betrifft eine Spiralfeder mit mindestens einer Windung. Die Spiralfeder besteht aus einem massiven Kern aus einem Siliziummaterial. Der Kern umfasst zwei lange, parallele und geradlinige Seiten und zwei kurze parallele und geradlinige Seiten.

Ferner betrifft die Erfindung ein Verfahren zur Herstellung einer Spiralfeder für mechanische Uhrwerke.

Ebenso betrifft die Erfindung ein mechanisches Uhrwerk, das die erfindungsgemäße Spiralfeder eingebaut hat.

### Stand der Technik

Schwingsysteme für mechanische Uhrwerke, insbesondere für Armbanduhren, werden in der Fachwelt auch als Unruh bezeichnet. Die Unruh umfasst einen Schwingkörper, welcher mittels einer Unruhwelle schwenkbar um eine Drehachse gelagert ist. Ferner ist eine Spiral- bzw. Unruhfeder vorgesehen, die zusammen mit der Masse des Schwingkörpers das schwingungsfähige und taktgebende System bildet.

Bei der Herstellung der Spiralfedern sind Toleranzen nicht auszuschließen. Dies gilt in verstärktem Maße für Spiralfedern aus Silizium, die an ihren Oberflächen bzw. Außenflächen zur Erzielung der notwendigen Festigkeit und/oder Temperaturunabhängigkeit mit einer einheitlichen Beschichtung aus Siliziumdioxid versehen werden. In der Regel erfolgt diese Beschichtung durch thermische Oxidation.

Aus der EP 1 422 436 A1 ist ein Verfahren zum Herstellen von Spiralfedern für das Schwingsystem von mechanischen Uhren aus einkristallinem Silizium bekannt. Der Silizium-Kern der Spiralfeder ist dabei vollkommen mit Siliziumdioxid ummantelt.

Die europäische Patentanmeldung EP 2 284 628 A2 offenbart einen Resonator (Spiralfeder), der thermisch kompensiert ist und einen Kern aus monokristallinem Silizium besitzt. Die thermische Oxidation der Spiralfeder ist gemäß einer Ausführungsform derart ausgebildet, dass mindestens eine Außenfläche des Schwingbereichs des Kerns mit einer Beschichtung versehen ist und mindestens eine andere Fläche mit keiner Beschichtung versehen ist. Gemäß einer weiteren Ausführungsform ist der Schwingbereich des Kerns an mindestens zwei angrenzenden Außenflächen mit einer Beschichtung versehen, wobei sich diese Beschichtungen jeweils in deren Dicke unterscheiden.

Die europäische Patentanmeldung EP 2 589 568 A1 offenbart ein mikromechanisches Teil, das einen Kern aus einem Halbleitermaterial und einer Beschichtung aus einem elektrisch-isolierenden Material, wie z.B. Diamant oder Siliziumdioxid, umfasst. Die Beschichtung ist auf einer Oberfläche des Kerns ausgebildet. Der Kern weist eine innere Schicht und eine äußere Schicht auf, wobei die elektrische Leitfähigkeit der Außenschicht größer als die der inneren Schicht ist.

Die schweizerische Patentanmeldung CH 699 780 A2 offenbart eine Feder, die aus einem Siliziumstab mit einer Außenfläche besteht. Der Siliziumstab hat einen Elastizitätsmodul und einen Wärmeausdehnungskoeffizienten. Es ist ein Material vorgesehen, das teilweise den Wärmekoeffizienten kompensiert, wobei das Material Invar, Elinvar, Kovar oder Siliziumdioxid ist. Das Material ist in Form einer Abdeckung auf den Siliziumstab aufgebracht.

Die internationale Patentanmeldung WO 2011/072960 A1 offenbart einen thermisch kompensierten Resonator. Der Körper des Resonators hat einen Kern aus SiliziumMaterial. Der Körper oder Kern trägt zumindest eine erste und eine zweite Beschichtung, die so ausgewählt sind, dass die Wärmeausdehnung im Wesentlichen null ist.

Das US-Patent US 8,562,206 offenbart eine Spiralfeder. In jeder Windung der Spiralfeder ist eine Vielzahl von Öffnungen vorgesehen, die sich durch die Spirale der Feder erstrecken.

Die internationale Patentanmeldung PCT/IB2015/054783 betrifft eine Spiralfeder und ein Verfahren zur Herstellung einer Spiralfeder. Die Spiralfeder ist mit einem Spiralfederbefestigungsabschnitt und einem daran anschließenden Schwingungsbereich versehen, der mindestens eine Windung besitzt. Der Kern der Spiralfeder ist aus Silizium. Mindestens zwei lange Seitenflächen des Kerns verbinden mindestens zwei kurze Seitenflächen miteinander. In mindestens einer oberen Seitenfläche und entlang einer Windung des Schwingungsbereichs ist mindestens eine Vertiefung in einem zweiten Teilbereich in der SiO₂ - Schicht ausgebildet, deren Tiefe zumindest bis auf den Kern aus Silizium reicht.

Die internationale Patentanmeldung WO 2014/203086 A1 offenbart ein Schwingsystem für mechanische Uhrwerke, eine Spiralfeder und ein Verfahren zur Herstellung einer Spiralfeder. Die Spiralfeder ist mit einem Spiralfederbefestigungsabschnitt, einem daran anschließenden Schwingungsbereich mit mindestens einer Windung und einem an den Schwingungsbereich anschließenden Stabilisierungsbereich versehen. Ein Kern aus Silizium besitzt über die Länge des Schwingungsbereichs vor dem thermischen Oxidieren im Wesentlichen einen konstanten Querschnitt. Nach dem thermischen Oxidieren weist die Spiralfeder im Schwingungsbereich mindestens einen ersten Teilbereich mit einer ersten Höhe und mindestens einen zweiten Teilbereich mit einer zweiten Höhe auf. Dabei ist die erste Höhe größer, als die zweite Höhe.

Die deutsche Patentanmeldung DE 10 2008 061 182 A1 offenbart ein Verfahren zum Herstellen eines Mikrobauteils, insbesondere eines Mikrobauteils für ein mechanisches Uhrwerk einer Armbanduhr. Das Mikrobauteil wird durch Laserschneiden aus einer Nutzschicht, die aus Siliziumcarbid, polykristallinem Silizium oder einem keramischen Werkstoff besteht, getrennt.

Die deutsche Patentanmeldung DE 10 2008 029 429 A1 offenbart ein Verfahren zum Herstellen von Federn, insbesondere Spiralfedern für Schwingsysteme von Uhrwerken, insbesondere von Uhrwerken für Armbanduhren mit einem eine Vielzahl von Windungen aufweisenden Federkörper.

Die internationale Patentanmeldung WO 2009/068091 A1 betrifft einen mechanischen Oszillator, insbesondere für Armbanduhren. Eine Spiralfeder mit mehreren Windungen besteht aus einem einkristallinen Silizium (Si)-Kern, der mindestens eine periphere Beschichtung auf der Basis eines Materials trägt, die aus einem von Silizium verschiedenen thermoelastischen Koeffizienten besteht.

Die internationale Patentanmeldung WO 2007/000271 A1 betrifft ein mikromechanisches Bauteil, beispielsweise einen Oszillator für Armbanduhren. Der Oszillator besteht aus einem Siliziumkern. Ein Teil oder die gesamte Oberfläche des Siliziumkerns ist mit einem dicken amorphen Material beschichtet. Das Material ist vorzugsweise Siliziumdioxid und mindestens fünfmal dicker als natives Siliziumdioxid.

Das eidgenössische Patent CH 703 445 B1 offenbart ein mikromechanisches Bauteil, das zwei Sekantenflächen besitzt, die durch eine Verbindung in der Form eines runden Anschlags miteinander verbunden sind. Den vertikalen Seiten und einem oberen Teil sind jeweils Sekantenebenen zugeordnet. Eine Beschichtung mit Siliziumdioxid ist nicht offenbart.

### Darstellung der Erfindung

Aufgabe der Erfindung ist, eine Spiralfeder bereitzustellen, die ein dauerhaft ausgezeichnetes Schwingungsverhalten zeigt, verzugsfrei in der Ebene der Spiralfeder ist und eine Stabilität gegen Federbrüche besitzt. Hinzu kommt, dass die Spiralfeder auch reproduzierbar hinsichtlich des Schwingungsverhaltens ist, ohne dabei die erforderliche Temperaturkompensation zu vernachlässigen.

Diese Aufgabe wird erfindungsgemäß durch eine Spiralfeder gemäß Patentanspruch 1 gelöst.

Eine weitere Aufgabe der Erfindung ist, ein Verfahren zur Herstellung einer Spiralfeder für mechanische Uhrwerke bereitzustellen, das einfach und zuverlässig durchzuführen ist und woraus eine Spiralfeder mit einem dauerhaft ausgezeichneten Schwingungsverhalten resultiert, die ebenfalls die erforderliche Temperaturkompensation aufweist und verzugsfrei in der Ebene der Spiralfeder ist und eine Stabilität gegen Federbrüche besitzt.

Diese Aufgabe wird erfindungsgemäß durch ein Verfahren zur Herstellung einer Spiralfeder für mechanische Uhrwerke gemäß Patentanspruch 7 gelöst.

Eine mögliche Ausführungsform der Spiralfeder ist, dass die mindestens eine Windung der Spiralfeder mindestens eine Windung umfasst, die aus einem massiven Kern aus einem Siliziummaterial besteht. Der Kern hat zwei lange parallele und geradlinige Seiten und zwei kurze parallele und geradlinige Seiten. Zur Kompensation des thermischen Ausdehnungskoeffizienten sind zumindest die geradlinigen gegenüberliegenden langen Seiten des Kerns von einer Schicht zur Kompensation des thermischen Ausdehnungskoeffizienten bedeckt. Vorzugsweise ist die Schicht eine SiO₂ - Schicht.

Eine weitere Ausgestaltungsmöglichkeit der Spiralfeder ist, dass die die obere kurze und geradlinige Seite und die beiden gegenüberliegenden langen Seiten von einer Schicht, vorzugsweise einer SiO₂ - Schicht, umschlossen sind.

Eine weitere mögliche Ausführungsform der Spiralfeder ist, dass diese mindestens eine Windung umfasst, die aus einem massiven Kern aus einem Siliziummaterial besteht. Der Kern selbst umfasst unter anderem im Wesentlichen zwei lange, parallele und geradlinige Seiten und zwei kurze, parallele und geradlinige Seiten. Dabei ist die obere, kurze und geradlinige Seite beidseits über jeweils einen stetig differenzierbaren oberen Abschnitt mit den gegenüberliegenden langen Seiten verbunden. Die gegenüberliegenden langen und geradlinigen Seiten, die jeweils stetig differenzierbaren oberen Abschnitte, die die obere kurze und geradlinige Seite beidseits mit den gegenüberliegenden langen und geradlinigen Seiten verbinden, und die obere kurze und geradlinige Seite sind von einer SiO₂ - Schicht (20) bedeckt.

Auch die untere, kurze und geradlinige Seite ist beidseits über jeweils einen stetig differenzierbaren unteren Abschnitt mit den gegenüberliegenden, langen und geradlinigen Seiten verbunden. Der Kern ist zumindest an den gegenüberliegenden, langen und geradlinigen Seiten und zumindest teilweise an dem jeweiligen stetig differenzierbaren oberen Abschnitt und dem jeweiligen stetig differenzierbaren unteren Abschnitt von einer SiO₂ - Schicht bedeckt.

Die Spiralfeder könnte derart gestaltet sein, dass sich die beiden stetig differenzierbaren oberen Abschnitte von den stetig differenzierbaren unteren Abschnitten unterscheiden.

Gemäß einer möglichen Ausführungsform der Spiralfeder ist die kurze untere Seite und die kurze obere Seite mit einer SiO₂ - Schicht versehen, so dass der Kern von einer SiO₂ - Schicht umgeben ist. Die Dicke und/oder Form der SiO₂ - Schicht unterscheiden sich dabei an der unteren kurzen Seite und der oberen kurzen Seite. Die Dicke der SiO₂-Schicht kann zwischen 2µm und 5µm betragen.

Die Spiralfeder selbst umfasst einen Spiralfederbefestigungsabschnitt, einen Spiralfederendabschnitt und mindestens einen dazwischenliegenden Spiralfederringabschnitt, der die mehreren Windungen der Spiralfeder umfasst. Die Spiralfeder kann in einer mechanischen Uhr eingebaut werden.

Der Kern der Spiralfeder kann aus amorphem Silizium, teilweise amorphem Silizium, Polysilizium, einem monokristallinem Siliziumgefüge oder aus einem Silizium Sintermaterial bestehen. Bevorzugt besteht die Spiralfeder aus einem polykristallinen Siliziummaterial. Das polykristalline Siliziummaterial kann auf verschiedene Weisen produziert werden. Eine CVD-Abscheidung oder ein Epitaxie-Abscheiden des polykristallinem Siliziums erfolgt beispielsweise in der Form, dass das hierdurch erhaltene Ausgangsmaterial eine dünne Schicht oder einen Wafer bildet, dessen Dicke dann gleich oder im Wesentlichen gleich derjenigen Dicke ist, die der Höhe der herzustellenden Spiralfedern entspricht. Auch ist eine CVD-Abscheidung zum Erzeugen von polykristallinem Silizium vorstellbar. Hierbei werden zunächst Wafer oder dünne Schichten gewonnen, aus denen dann die Spiralfedern hergestellt werden. Ebenso erhält man mit dem PVT-Verfahren (Physical Vapour Transport (PVT)) durch Sublimation polykristallines Silizium. Das polykristalline Silizium bildet sich durch Sublimation von Silizium oder Siliziumcarbid auf der Sperrschicht mit der Dicke aus, die dann gleich oder im Wesentlichen gleich derjenigen Dicke ist, die die herzustellende Spiralfeder haben soll. Ein Gießen von polykristallinem Silizium ist ebenfalls möglich. Eine weitere Möglichkeit zur Herstellung von polykristallinem Silizium ist das Siemens-Verfahren. Aus dem damit hergestellten Silizium werden Wafer geschnitten und ggf. auch die erforderliche Dicke geläppt, die dann im Wesentlichen der Höhe der herzustellenden Spiralfedern entspricht.

Das erfindungsgemäße Verfahren zur Herstellung einer Spiralfeder aus einem Siliziummaterial ist gemäß einer möglichen Ausführungsform durch die folgenden Schritte ausgestaltet:
- Bereitstellen eines Trägers, wobei der Träger die Form eines Wafers haben kann;
- Aufbringen eines Siliziummaterials auf den Träger, wobei das Siliziummaterial einen Kern mindestens einer Windung der Spiralfeder bildet;
- Ätzen der mindestens einen Windung der Spiralfeder, so dass der Kern der mindestens einen Windung der Spiralfeder ausgeformt wird, der zwei lange, parallele und geradlinige Seiten und zwei kurze parallele und geradlinige Seiten umfasst;
- Ausführen einer thermischen Oxidation, wobei eine Schicht eines Oxids zumindest auf die durch die langen Seiten definierten und freigelegten Seitenflächen der Spiralfeder aufwächst; und
- Entfernen des Trägers von dem Siliziummaterial.

Gemäß einer möglichen Ausführungsform des Verfahrens, wächst beim Ausführen der thermischen Oxidation die Schicht des Oxids auf die durch die langen Seiten definierten und freigelegten Seitenflächen und auf die durch die obere, kurze und geradlinige Seite definierte und freigelegte Seitenfläche der Spiralfeder auf.

Bei einer möglichen Ausführungsform des Ätzprozesses der mindestens einen Windung der Spiralfeder wird der Kern der mindestens einen Windung der Spiralfeder ausgeformt. Dabei entstehen zwei lange, parallele und geradlinige Seiten und zwei kurze parallele und geradlinige Seiten. Dabei ist die obere, kurze und geradlinige Seite beidseits über jeweils einen stetig differenzierbaren oberen Abschnitt mit den gegenüberliegenden langen Seiten verbunden.

Bei einer weiteren Ausführungsform des Ätzprozesses der mindestens einen Windung der Spiralfeder wird der Kern der mindestens einen Windung der Spiralfeder ausgeformt. Dabei entstehen zwei lange, parallele und geradlinige Seiten und zwei kurze parallele und geradlinige Seiten. Dabei ist die obere, kurze und geradlinige Seite beidseits über jeweils einen stetig differenzierbaren oberen Abschnitt mit den gegenüberliegenden langen Seiten verbunden. Ebenso ist eine untere, kurze und geradlinige Seite beidseits über jeweils einen stetig differenzierbaren unteren Abschnitt mit den gegenüberliegenden langen Seiten verbunden.

Zur Ausbildung des stetig differenzierbaren unteren Abschnitts ist das Ätzen der mindestens einen Windung der Spiralfeder derart ausgeführt , dass im Bereich der unteren Seite des Kerns eine Hinterätzung ausgebildet wird. Die Hinterätzung ist derart ausgebildet, dass zumindest der stetig differenzierbare untere Abschnitt, der die gegenüberliegenden langen Seiten jeweils beidseits mit der unteren kurzen und geradlinigen Seite verbindet, vom Träger beabstandet ist.

Eine weitere Möglichkeit der Ausgestaltung des Ätzprozesses ist, dass zwischen dem Träger und dem Siliziummaterial für den Kern der mindestens einen Windung der Spiralfeder eine Trennschicht vorgesehen ist. Das Ätzen der mindestens einen Windung der Spiralfeder wird derart ausgeführt, dass im Bereich der unteren, kurzen und geradlinigen Seite des Kerns eine Hinterätzung zumindest in der Trennschicht ausgebildet wird. Durch die Hinterätzung ist zumindest der stetig differenzierbare untere Abschnitt, der die gegenüberliegenden langen Seiten jeweils beidseits mit der unteren, kurzen und geradlinigen Seite verbindet, vom Träger beabstandet. Weitherhin können die Parameter des Ätzprozesses derart eingestellt werden, dass unterhalb eines ursprünglichen Niveaus des Trägers geätzt wird. Dies bedeutet, dass Material des Trägers in bestimmten Bereichen abgetragen wird.

Im Anschluss an den Ätzprozess wird eine Schicht aus einem Material zur Kompensation des thermischen Ausdehnungskoeffizienten des Siliziummaterials des Kerns der Windungen auf die mittels des Ätzprozesses freigelegten Begrenzungsflächen der mindestens einen Windung aufgebracht. Bevorzugt ist das das Material zur Kompensation des thermischen Ausdehnungskoeffizienten das gleiche Material, wie das der Trennschicht. Gemäß einer besonders bevorzugten Ausführungsform ist das Material der Schicht zur Kompensation des thermischen Ausdehnungskoeffizienten des Siliziummaterials eine SiO₂-Schicht. Die SiO₂-Schicht wird mittels thermischer Oxidation des Siliziummaterials des Kerns gebildet. Letztendlich erfolgt das Entfernen des Trägers, das mechanisch und/oder chemisch durchgeführt werden kann.

Der "aktive Schwingungsbereich" der Spiralfeder erstreckt sich von dem an den Spiralfederbefestigungsabschnitt der Spiralfeder anschließenden inneren Ende des aktiven Schwingungsbereichs bis zu dem äußeren Federhaltepunkt bzw. Spiralfederendabschnitt.

Eine weitere Ausführungsform der Erfindung betrifft eine Spiralfeder mit einem Spiralfederbefestigungsabschnitt, einem Spiralfederendabschnitt und mindestens einen dazwischenliegenden Spiralfederringabschnitt, der mindestens eine Windung besitzt. In der Regel hat der Spiralfederringabschnitt eine Vielzahl von Windungen. Die Spiralfeder hat einen massiven und polygonalen Kern aus einem Siliziummaterial mit mindestens zwei langen Seiten und mindestens zwei kurzen Seiten. Dabei tragen zwei gegenüberliegende lange Seiten zusammen mit einer oberen kurzen Seite eine SiO₂ - Schicht. Der Kern hat an den jeweiligen Übergängen der oberen, kurzen Seite zu den langen Seiten eine obere Verrundung bzw. einen stetig differenzierbaren oberen Abschnitt. Ferner hat der Kern an den jeweiligen Übergängen der unteren kurzen Seite zu den langen Seiten eine untere Verrundung bzw. einen stetig differenzierbaren unteren Abschnitt ausgebildet. Die obere Verrundung und untere Verrundung sind ebenfalls von der SiO₂ - Schicht bedeckt.

Die erfindungsgemäße Spiralfeder hat den Vorteil, dass sie die für ein störungsfreies Schwingverhalten die erforderliche mechanische Stabilität, die nötige Temperaturkompensation und eine Verzugsfreiheit besitzt. Hinzu kommt, dass mit der erfindungsgemäßen und im Gewicht reduzierten Spiralfeder auch die Lager der Spiralfeder geschont werden, was sich wiederum positiv auf die Ganggenauigkeit der Uhr und eine Verlängerung der Serviceintervalle auswirkt.

In der Regel ist der Kern der Spiralfeder rechteckig und besitzt somit zwei lange Seiten und zwei kurze Seiten, die zumindest über die Länge des Schwingungsbereichs durch zwei lange Seiten zwei lange Seitenflächen und durch die zwei kurzen Seiten zwei kurze Seitenflächen ausbilden. Der Kern hat somit zwei gegenüberliegende lange Seitenflächen und zwei gegenüberliegende kurze Seitenflächen.

Bei den ausgebildeten Verrundungen (stetig differenzierbare Abschnitte des Kerns) unterscheiden sich z.B. auch die Radien der oberen Verrundung und die Radien der unteren Verrundung. Gerade die Verrundungen an den Ecken des Kerns vermeiden mechanische Spannungsspitzen, was wiederum die Bruchgefahr der Spiralfeder verringert.

Gemäß einer möglichen Ausführungsform kann die Spiralfeder auch an der unteren kurzen Seite mit einer SiO₂ - Schicht versehen sein. Die SiO₂ - Schicht kann an der unteren Seite eine geringere Dicke besitzen, als die SiO₂ - Schicht an der oberen kurzen Seite bzw. an den beiden langen, parallelen Seiten. Bei dieser Ausführungsform wird die SiO₂ - Schicht an der unteren kurzen Seite in einer zweiten Stufe der thermischen Oxidation aufgebracht. Die Zeitdauer der thermischen Oxidation der unteren kurzen Seite wird derart gewählt, dass eine SiO₂ - Schicht mit einer geringeren Dicke aufwächst, als die Dicke der SiO₂ - Schicht auf den beiden Seitenflächen und der oberen Seitenfläche. Die Dicke der SiO₂ - Schicht auf der durch die untere kurze Seite gebildeten unteren Seitenfläche beträgt weniger als weniger als 2000nm. Bevorzugt ist die Dicke im Bereich von 750nm bis 500nm. Bevorzugt ist der Kern der Spiralfeder aus Polysilizium.

Bei der thermischen Oxidation des Kerns bilden sich an den jeweiligen Übergängen der oberen kurzen Seite zu den langen Seiten obere Verrundungen und an den jeweiligen Übergängen der unteren kurzen Seite zu den langen Seiten untere Verrundungen aus.

Gemäß einer Ausführungsform des Verfahrens kann auf dem Träger vor dem Aufbringen des den Kern der Spiralfeder bildenden Materials auf dem Träger eine Trennschicht aufgebracht werden. Ebenso kann das Material für den Kern der Spiralfeder mit einer Trennschicht versehen sein. Der Wafer mit dem Material für die Windungen der Spiralfeder und der Trennschicht wird z. B. an den Träger gebonded.

Die durch den Ätzprozess hergestellten und freigelegten Spiralfedern sind noch mit der Materialschicht verbunden. Die Materialschicht mit den Spiralfedern kann vom Träger bzw. vom Träger mit der Trennschicht mit mechanischen und/oder chemischen Verfahren zumindest teilweise entfernt werden. Gemäß einer möglichen Ausführungsform kann der Träger oder der Träger und die Trennschicht in einem Bereich entfernt werden, der kleiner ist, als der Durchmesser des Trägers. Dies hat den Vorteil, dass somit am Rand für die Handhabung noch ausreichend Material zum Handhaben zur Verfügung ist.

Ebenso ist es mögliche, dass vor dem zumindest teilweisen Entfernen des Träger die Trennschicht, die bevorzugt ebenfalls eine SiO₂ - Schicht ist, in den freien Bereichen durch einen Ätzprozess abgetragen wird. Nach dem anschließenden Entfernen des Trägers erhält man freigelegte Kerne der Spiralfedern, die an der unteren Seite die Trennschicht aus SiO₂ tragen.

Nachdem der Träger oder der Träger und die Trennschicht entfernt worden sind, kann an der der oberen kurzen Seite und der gegenüberliegenden unteren, kurzen Seite, falls diese keine Beschichtung trägt, die weitere thermische Oxidation durchgeführt werden. Die Dauer der thermischen Oxidation ist dabei derart bemessen, dass die dadurch aufgebrachte Dicke (etwa 2000nm) der Oxid-Schicht kleiner ist, als die Dicke der Oxidschicht an den Seitenflächen und der oberen Seitenfläche der Spiralfeder. Bevorzugt ist die Dauer der thermischen Oxidation kleiner als 1,5 Stunden und besonders bevorzugt ist die Dauer der thermischen Oxidation kleiner als 1 Stunde.

Weitere vorteilhafte Aspekte, Details und Ausgestaltungen der Erfindung ergeben sich aus den abhängigen Ansprüchen, der Beschreibung sowie den Figuren.

Im Folgenden sollen Ausführungsbeispiele die Erfindung und ihre Vorteile anhand der beigefügten Figuren näher erläutern. Die Größenverhältnisse in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Dabei zeigen:
- Fig. 1: beispielhaft eine perspektivische Ansicht eines Schwingsystems für Uhrwerke von mechanischen Uhren gemäß dem Stand der Technik;
- Fig. 2: beispielhaft einen Schnitt entlang einer die Achse der Unruhwelle aufnehmenden Ebene durch das Schwingsystem des Uhrwerks gemäß Figur 1;
- Fig. 3: beispielhaft eine perspektivische Seitenansicht der freigestellten Komponenten des Schwingungssystems gemäß Figur 1 und 2 für ein Uhrwerk;
- Fig. 4: eine perspektivische Ansicht der Spiralfeder in Verbindung mit der Unruhwelle eines Uhrwerks;
- Fig. 5: eine Ansicht des Querschnitts durch eine Windung der Spirale, die einen Kern aus einem Siliziummaterial besitzt;
- Fig. 6A - 6D: eine schematische Darstellung des Ablaufs einer möglichen Ausführungsform des Verfahrens zur Herstellung einer Spiralfeder;
- Fig. 7A - 7D: eine schematische Darstellung einer weiteren Ausführungsform des Ablaufs des Verfahrens zur Herstellung einer Spiralfeder;
- Fig. 8A - 8C: eine mögliche Ausführungsform der Ausbildung des Querschnitts der Windungen einer Spiralfeder;
- Fig. 9: eine schematische Darstellung des teilweisen Querschnitts der Spiralfeder im oberen Bereich der Spiralfeder nach der thermischen Oxidation;
- Fig. 10: eine schematische vergrößerte Ansicht eines Querschnitts, bei dem die einzelnen Windungen der Spiralfeder durch Ätzen vom umgebenden Siliziummaterial freigelegt worden sind;
- Fig. 11: eine vergrößerte Ansicht eines Querschnitts, bei dem die einzelnen freigelegten Windungen der Spiralfeder, die mit einer thermischen Oxidation behandelt wurden, noch mit dem Träger verbunden sind;
- Fig. 12: eine schematische vergrößerte Ansicht eines Querschnitts der Windung der Spiralfeder, die aufgrund der thermischen Oxidation mit einer Oxid-Schicht umgeben und der Träger entfernt ist;
- Fig. 13: eine schematische vergrößerte Ansicht eines Querschnitts einer anderen Ausführungsform, bei der die einzelnen Windungen der Spiralfeder durch Ätzen vom umgebenden Siliziummaterial freigelegt worden sind;
- Fig. 14: eine vergrößerte Ansicht eines Querschnitts der Ausführungsform nach Fig. 13, bei dem die einzelnen freigelegten Windungen der Spiralfeder, die mit einer thermischen Oxidation behandelt wurden, noch mit dem Träger verbunden sind;
- Fig. 15: eine schematische vergrößerte Ansicht eines Querschnitts der oxidierten Windung der Spiralfeder aus Figur 14, bei der der Träger entfernt ist;
- Fig. 16: eine schematische vergrößerte Ansicht eines Trägers mit Trennschicht, auf der eine Schicht aus Siliziummaterial für den Kern der Windungen der Spiralfeder vorhanden ist;
- Fig. 17: eine schematische vergrößerte Ansicht der Schicht aus Siliziummaterial; aus der die Windungen der Spiralfeder geätzt sind;
- Fig. 18: eine schematische Darstellung, wobei die geätzten Windungen durch thermische Oxidation mit einer Oxidschicht versehen sind;
- Fig. 19: eine schematische Darstellung des Trägers mit den Windungen, bei denen die Oxidschicht vollständig und die Trennschicht zumindest teilweise entfernt sind; und
- Fig. 20: eine schematische Darstellung der Windungen, wobei die freigelegten Bereiche der Seitenflächen erneut einer thermischen Oxidation unterzogen worden sind.

### Ausführliche Beschreibung der Zeichnung

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind.

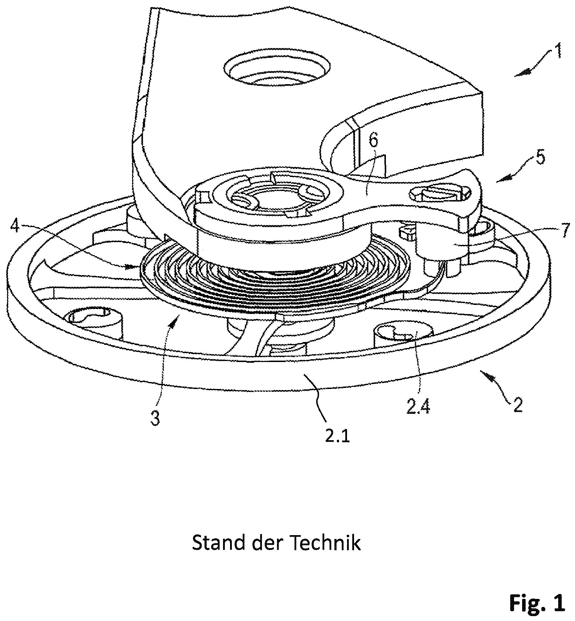

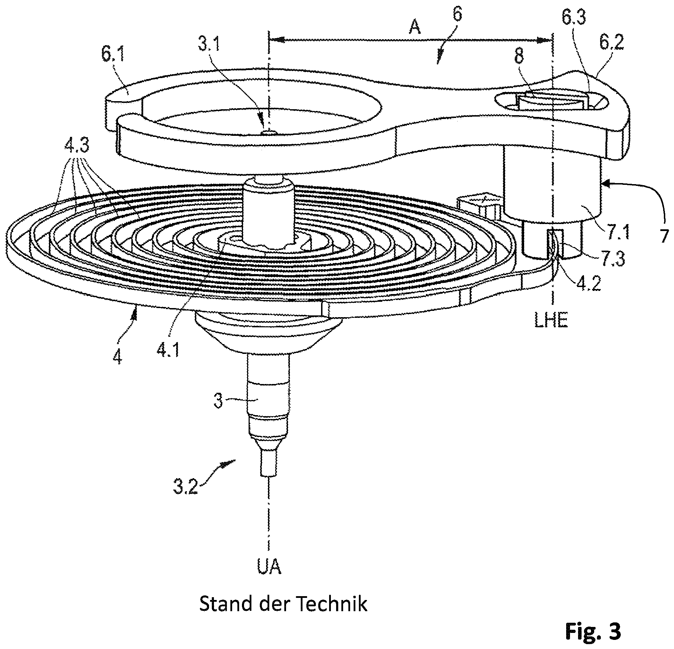

Zum besseren Verständnis der vorliegenden Erfindung und des technischen Umfelds, bei dem die Erfindung verwendet wird, wird im Zusammenhang mit den **Figuren 1 bis 3** ein aus dem Stand der Technik bekanntes Schwingsystem für mechanische Uhrwerke beschrieben.

Das Schwingsystem 1 umfasst einen Schwingkörper in Form eines Schwungrads 2, eine Unruhwelle 3 sowie eine Spiralfeder 4. Das Schwungrad 2 besteht aus einem äußeren Kreisringabschnitt 2.1, der über mehrere Speichen 2.2 mit einem Nabenabschnitt 2.3 verbunden ist. Der Nabenabschnitt 2.3 weist eine von der Kreisform abweichende, zentrale Durchgangsbohrung auf, in welcher ein zugeordneter Wellenabschnitt 3' der Unruhwelle 3 aufgenommen ist, dessen konzentrische Außenseite einen Formschluss mit dem Nabenabschnitt 2.3 des Schwungrades 2 herstellt. Damit ist das Schwungrad 2 drehfest mit der Unruhwelle 3 verbunden. Darüber hinaus sind an der zum Drehzentrum des Schwungrades 2 weisenden Innenseite des äußeren Kreisringabschnitts 2.1 mehrere Schwungmassen 2.4 angebracht.

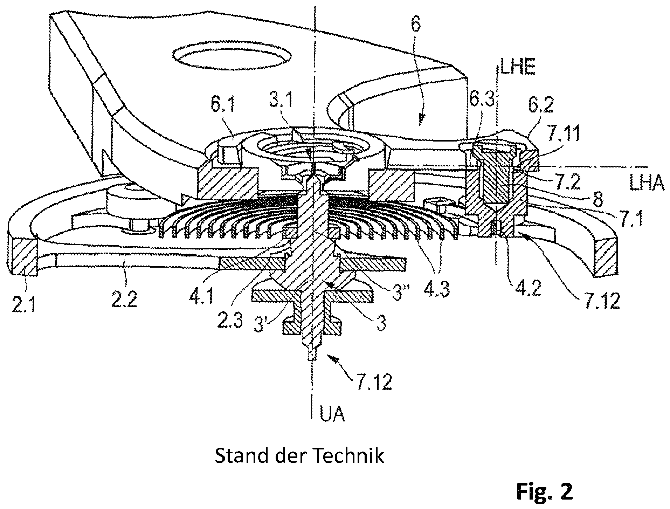

Die Unruhwelle 3 weist ferner ein oberes und unteres freies Ende 3.1, 3.2 auf, welche spitz zulaufen und zur drehbaren Lagerung der Unruhwelle 3 um deren Achse UA in entsprechend ausgebildeten oberen und unteren Lagereinheiten aufgenommen werden. In den Figuren 1 und 2 ist beispielhaft eine obere Lagereinheit dargestellt. Die Achse UA der Unruhwelle 3 ist damit zugleich auch die Drehachse des Schwungrades 2 und die Achse der Spiralfeder 4.

Die Spiralfeder 4 besteht aus einem vorzugsweise ringförmigen, inneren Spiralfederbefestigungsabschnitt 4.1 und einem äußeren Spiralfederendabschnitt 4.2. Dazwischen befinden sich mehrere Spiralfederringabschnitte 4.3, welche in einer Ebene senkrecht und vorzugsweise konzentrisch zur Achse der Spiralfeder 4 verlaufen, welche mit der Achse UA der Unruhwelle 3 übereinstimmt.

Der vorzugsweise ringförmige, innere Spiralfederbefestigungsabschnitt 4.1 ist mit der Unruhwelle 3 drehfest verbunden, und zwar vorzugsweise verklebt und/oder mittels Formschluss. Hierzu weist die Unruhwelle 3 einen zur Aufnahme des inneren Spiralfederbefestigungsabschnitts 4.1 ausgebildeten Wellenabschnitt 3" auf, der oberhalb des das Schwungrad 2 aufnehmenden Wellenabschnitts 3' angeordnet ist.

Zur in Bezug auf die Unruhwelle 3 drehfesten Befestigung des äußeren Spiralfederendabschnitts 4.2 ist die Halteanordnung 5 zur Einstellung des Zentrums der Spiralfeder 4 vorgesehen. Die Halteanordnung 5 umfasst zumindest einen Haltearm 6 und ein Halteelement 7, welches im Bereich des äußeren freien Endes des Haltearms 6 entlang der Längsachse LHA des Haltearms 6 verschiebbar befestigt ist.

Der Haltearm 6 weist ein inneres Haltearmende 6.1 und ein äußeres Haltearmende 6.2 auf, wobei das innere Haltearmende 6.1 einen offenen Kreisring ausbildet und im Bereich des äußeren Haltearmendes 6.2 eine längliche Führungsausnehmung 6.3 vorgesehen ist. Die längliche Führungsausnehmung 6.3 ist zur variablen Befestigung des Halteelementes 7 am Haltearm 6 vorgesehen. Das innere Haltearmende 6.1 ist über nicht näher bezeichnete Haltemittel, welche auch die oberen und unteren Lagereinheiten zur drehbaren Lagerung der Unruhwelle 3 aufnehmen können, drehfest befestigt, und zwar derart, dass der offene Kreisring des inneren Haltearmendes 6.1 die Achse UA der Unruhwelle 3 konzentrisch umgibt.

Das Halteelement 7 weist einen im Wesentlichen zylinderförmigen, länglichen Grundkörper 7.1 mit einer oberen und unteren Stirnseite 7.11, 7.12 und einer Längsachse LHE auf, welcher eine zur oberen Stirnseite 7.11 geöffnete Sacklochbohrung 7.2 mit einem Innengewinde zur Aufnahme einer Schraube 8 aufweist. Mittels der Schraube 8, welche durch die längliche Führungsausnehmung 6.3 des Haltearms 6 geführt wird, ist das Halteelement 7 fest mit dem Haltearm 6 verschraubbar, und zwar derart, dass die Längsachse LHA des Haltearms 6 und die Längsachse LHE des Halteelementes 7 senkrecht zueinander verlaufen.

Auf der gegenüberliegenden unteren Stirnseite 7.12 des Grundkörpers 7.1 des Halteelementes 7 ist eine sich senkrecht zur Längsachse LHE des Grundkörpers 7.1 erstreckende und nach unten offene Führungsausnehmung 7.3 vorgesehen, die zur radial führenden Aufnahme des äußeren Spiralfederendabschnitts 4.2 ausgebildet ist. Eine die Längsachse LHE des Grundkörpers 7.1 aufnehmende Ebene teilt die Führungsausnehmung 7.3 näherungsweise in zwei gegenüberliegende, gleiche Hälften des gabelartig ausgebildeten unteren freien Endes des Halteelementes 7.

Im montierten Zustand ist damit mittels der Halteanordnung 5 der radiale Abstand A zwischen der Achse UA der Unruhwelle 3 und der Längsachse LHE des Halteelementes 7 und damit des äußeren Spiralfederendabschnitts 4.2 einstellbar. Durch eine entsprechende radiale zur Achse UA gerichtete Verschiebung des Halteelementes 7 und damit des äußeren Spiralfederendabschnitts 4.2 ist das Spiralfederzentrum justierbar, und zwar vorzugsweise derart, dass die Spiralfederringabschnitte 4.3 jeweils denselben Abstand zueinander aufweisen und konzentrisch um die Achse UA verlaufen.

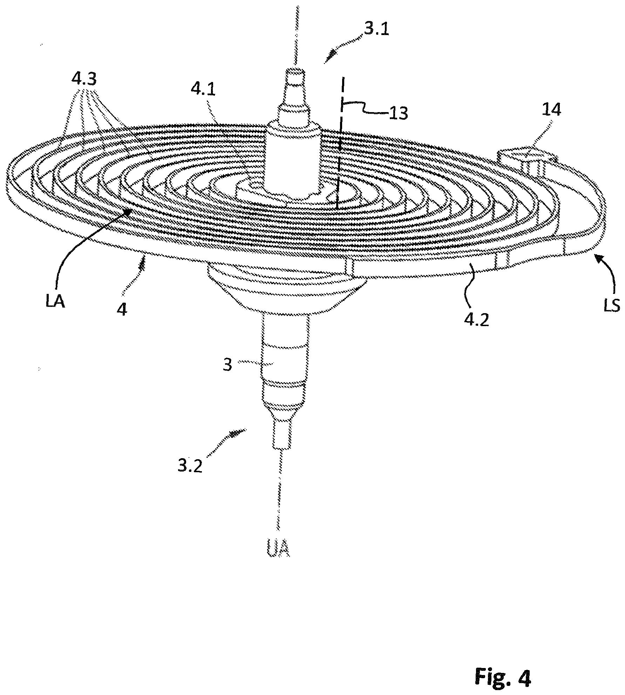

**Figur 4** zeigt eine perspektivische Ansicht einer möglichen Ausführungsform der Spiralfeder 4, die mit ihrem Spiralfederbefestigungsabschnitt 4.1 drehfest mit der Unruhwelle 3 verbunden ist. Den Schwingungsbereich LA bilden die Spiralfederringabschnitte 4.3 der Spiralfeder 4, die die mehreren Windungen der Spiralfeder bilden. Die Spiralfederringabschnitte 4.3 reichen von einem inneren Ende 13 des Spiralfederbefestigungsabschnitts 4.1 bis zu einem Stabilisierungsbereich LS und bilden den Schwingungsbereich LA. Die hier dargestellte Ausführungsform des Stabilisierungsbereichs LS stellt eine von mehreren möglichen Ausführungsformen dar und soll nicht als Beschränkung der Erfindung aufgefasst werden.

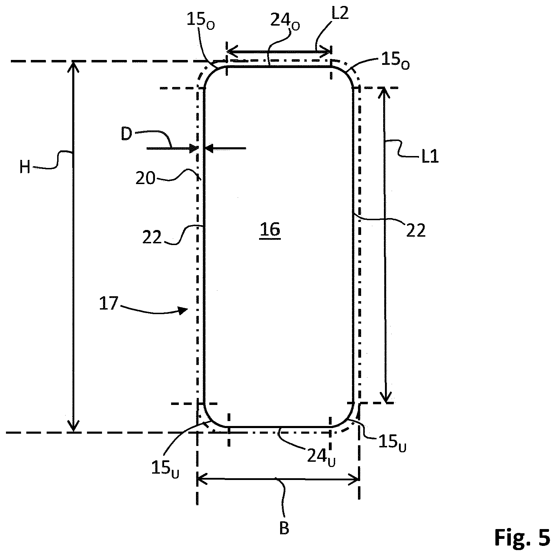

**Figur 5** zeigt einen Querschnitt 17 durch eine Windung 9 der Spiralfeder 4. Der Querschnitt 17 ist über die gesamte Länge der Windungen 9 des Schwingungsbereichs LA im Wesentlichen konstant. Die Windungen 9 einer Spiralfeder 4, die für den Einbau in das Schwingsystem 1 einer Uhr produziert ist, besteht aus einem Kern 16 aus Siliziummaterial. Das Siliziummaterial kann z.B. aus polykristallinem Silizium, gesinterten Silizium, oder einem monokristallinen Siliziumgefüge, etc. bestehen. Zur Kompensation des thermischen Ausdehnungskoeffizienten ist der Kern 16 mit einer Schicht aus einem Material zumindest teilweise umgeben. Bei der hier dargestellten Ausführungsform umschließt die Schicht des Materials den Kern 16 vollkommen. Es ist für einen Fachmann selbstverständlich, dass auch Ausführungsformen möglich sind, bei denen nur Seitenflächen der Windungen 9 der Feder mit dem Material zu Temperaturkompensation versehen sind. Gemäß einer bevorzugten Ausführungsform wird die Schicht 20 durch thermisches Oxidieren der Kerns 16 erzeugt. Die gebildete Schicht 20 ist eine SiO₂ - Beschichtung mit einer Dicke D zwischen 2µm bis 5µm. Der Querschnitt 17 besitzt eine Höhe H und eine Breite B. Dabei ist der Querschnitt 17 derart ausgebildet, dass gegenüberliegende lange und geradlinige Seiten 22 eine Länge L1 besitzen, die kleiner ist als die Höhe H. Die untere kurze und geradlinige Seite 24u und die obere kurze und geradlinige Seite 24o haben eine Länge L2 die kleiner ist als die Breite des Querschnitts 17. Der Kern 16 ist im Querschnitt 17 ferner derart gestaltet, dass die obere kurze und geradlinige Seite 24o beidseits über jeweils einen stetig differenzierbaren oberen Abschnitt 15o mit den gegenüberliegenden langen Seiten 22 verbunden ist. Ebenso kann die untere kurze und geradlinige Seite 24u beidseits über jeweils einen stetig differenzierbaren unteren Abschnitt 15u mit den gegenüberliegenden langen und geradlinigen Seiten 22 des Kerns 16 verbunden sein.

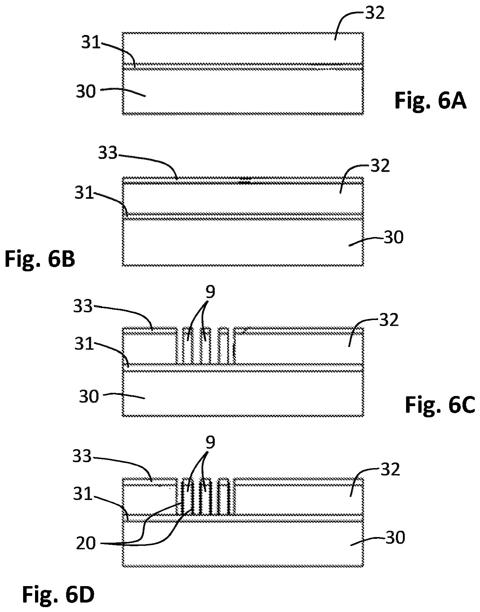

Die **Figuren 6A** bis **6D** zeigen schematisch den Ablauf eines Verfahrens zum Herstellen eines mikromechanischen Bauteils, insbesondere einer Spiralfeder 4 mit deren Windungen 9. Es wird ein Träger 30 zur Verfügung gestellt, auf dem das Siliziummaterial 32 in einer Schichtdicke aufgebracht sein kann, die im Wesentlich der Höhe des Kerns 16 der Spiralfeder 4 entspricht. Zwischen dem Siliziummaterial 32 und dem Träger 30 ist bei dieser Ausführungsform eine Trennschicht 31 vorgesehen. Die Trennschicht 31 kann auf den Träger 30 aufgebracht werden. Anschließend wird dann das Siliziummaterial 32 auf der Trennschicht 31 aufgebracht. Eine andere Möglichkeit ist, dass die Trennschicht 31 auf das Siliziummaterial 32 aufgebracht ist.

Ein Wafer aus dem Siliziummaterial 32 mit der Trennschicht 31 wird z.B. mit dem Träger 30 gebonded. Bevorzugt ist die Trennschicht SiO₂. Das Aufbringen bzw. das Ausbilden des Siliziummaterials 32 kann mit einer Vielzahl dem Fachmann bekannten Verfahren des Standes der Technik erfolgen. Schließlich wird eine Schicht 33 auf der freien Oberfläche des Siliziummaterials 32 für das mikromechanische Bauteil bzw. die Spiralfeder 4 aufgebracht, die das Aufwachsen eines Oxids bei der thermischen Oxidation verhindert. Bei der hier beschriebenen Ausführungsform des Verfahrens ist diese Schicht 33 z. B. eine Siliziumnitrid -Schicht. Das Bauteil bzw. die Windungen 9 der Spiralfeder 4 werden durch Ätzen freigelegt. Anschließend wird eine thermische Oxidation ausgeführt, wobei eine SiO₂ - Schicht 20 auf die freigelegten Flächen des Bauteils bzw. der Windungen 9 der Spiralfeder 4 ausgebildet wird. Letztendlich erfolgt das Ablösen oder Trennen der Schicht aus dem Siliziummaterial 32, die die mikromechanischen Bauteile bzw. die Spiralfedern 4 enthält, vom Träger 30. Die mikromechanischen Bauteile bzw. die Spiralfedern 4 sind noch mit der Schicht aus dem Siliziummaterial 32 für das mikromechanische Bauteil bzw. die Spiralfedern 4 verbunden. Das Ablösen oder Trennen der Schicht aus dem Siliziummaterial 32 vom Träger 30 kann mittels chemischer, mechanischer oder chemisch-mechanischer Prozesse erfolgen.

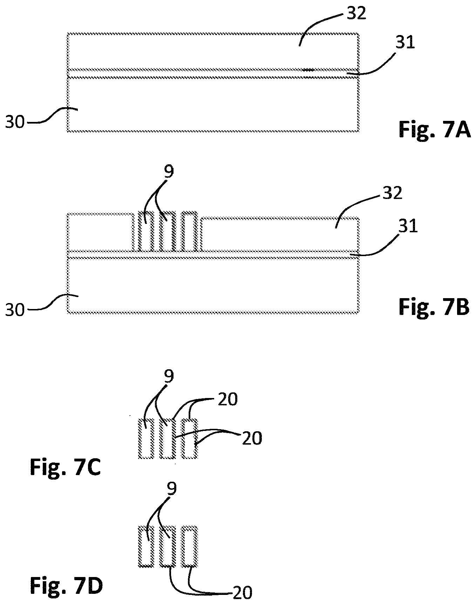

Die **Figuren 7A bis 7D** zeigen eine schematische Darstellung einer weiteren Ausführungsform des Ablaufs des Verfahrens zur Herstellung der Windungen 9 einer Spiralfeder 4. Obwohl sich die nachstehende Beschreibung auf die Herstellung einer Spiralfeder 4 bezieht, soll dies nicht als eine Beschränkung der Erfindung aufgefasst werden. Auch hier ist zwischen dem Träger 30 und der Schicht aus dem Siliziummaterial 32 eine Trennschicht 31 vorgesehen. Auf die Trennschicht 31 zwischen dem Träger 30 und der Schicht aus dem Siliziummaterial 32 kann verzichtet werden. Die Schicht aus dem Siliziummaterial 32 kann somit direkt auf den Träger 30 aufgebracht werden. Im Falle einer Trennschicht 31 ist diese aus SiO₂.

Ebenso wird bei dieser Ausführungsform auf die Schicht aus dem Siliziummaterial 32 für die Spiralfeder kein die thermische Oxidation behinderndes Material aufgebracht. Nach dem Ätzen bzw. dem Freilegen der Windungen 9 für die Spiralfeder 4 erfolgt eine erste Stufe der thermischen Oxidation. Die Schicht aus dem Siliziummaterial 32, das die Spiralfedern 4 umfasst, ist dabei immer noch mit dem Träger 30 verbunden. Bei der ersten Stufe der thermische Oxidation wäscht an den durch die langen und geradlinigen Seiten 22 definierten Seitenflächen (hier nicht dargestellt) und an der durch die obere kurze und geradlinige Seite 24o definierten oberen Seitenfläche des Kerns 16 der Spiralfeder eine SiO₂ - Schicht 20 auf. Nach der ersten Stufe der thermischen Oxidation wird der Träger 30 und hier auch die Trennschicht 31 mechanisch und/oder chemisch abgetragen. Ein mechanischer Abtrag kann z.B. durch Schleifen erfolgen.

Nach dem Entfernen des Trägers 30 ist somit die durch die untere, kurze und geradlinige Seite 24u definierte untere Seitenfläche des Kerns 16 der Spiralfeder 4 freigelegt. In einer zweiten Stufe der thermischen Oxidation kann dann in einer Ausführungsform des Verfahrens auch auf der unteren Seitenfläche des Kerns 16 der Spiralfeder 4 eine SiO₂ - Schicht 20 aufgebracht werden. Es ist möglich, dass die SiO₂ - Schicht 20 an der unteren Seitenfläche des Kerns 16 eine geringere Dicke besitzt, als die SiO₂ - Schicht 20 an den übrigen Seitenflächen des Kerns 16 der Windungen 9 der Spiralfeder.

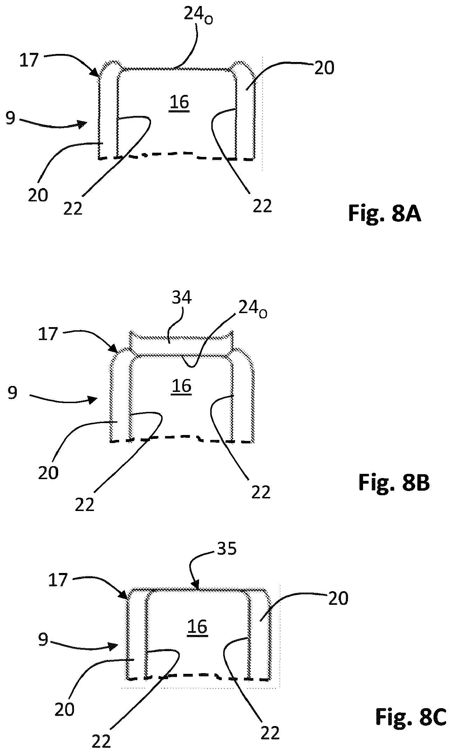

**Die** **Figuren 8A** - **8C** zeigen Ausführungsformen der Ausbildung des Querschnitts 17 der Windungen 9 einer Spiralfeder 4. Die zwei gegenüberliegenden langen Seiten 22 tragen zumindest über die Länge des Schwingungsbereichs LA eine SiO₂ - Schicht 20. Der Kern 16 hat zumindest an der oberen kurzen Seite 24o an den jeweiligen Übergängen zu den langen Seiten 22 den in Fig. 5 beschriebenen stetig differenzierbaren oberen Abschnitt 15o ausgebildet, der ebenfalls von der SiO₂ - Schicht 20 bedeckt ist. Bei der in Figur 8A gezeigten Ausführungsform überragt die SiO₂ - Schicht 20 an der oberen kurzen Seite 24_{O} das Niveau des Kerns 16. Auf der durch die obere kurze Seite 24o definiteren Oberfläche der Windungen 9 ist keine Oxidschicht vorhanden, dass dieser Bereich der Windungen 9 maskiert war. Diese Ausgestaltung der oberen Randbereiche der Spiralfeder 4 erstreckt sich zumindest entlang des Schwingungsbereichs der Spiralfeder 4.

**Figur 8B** zeigt eine weitere Ausführungsform der Ausbildung des Querschnitts 17 der Windungen 9 einer Spiralfeder 4, wobei der Kern 16 an der der oberen kurzen Seite 24o eine Maskierung 34 (bevorzugt Siliziumnitrid) trägt. Diese Ausgestaltung der oberen Randbereiche der Spiralfeder 4 erstreckt sich zumindest entlang des Schwingungsbereichs. Bei der thermischen Oxidation wächst zwischen der die thermische Oxidation behindernden Maskierung 34 und dem Material des Kerns 16 ein Oxid in Form eines Vogelschnabels. Es kommt somit zu einer Aufwölbung der Maskierung 34. Gemäß einer möglichen Ausführungsform kann die Maske bei der Ausgestaltung der oberen Randbereiche der Spiralfeder 4 zumindest abschnittsweise entlang des Schwingungsbereichs entfernt sein.

**Figur 8C** zeigt eine noch weitere Ausführungsform der Ausbildung des Querschnitts 17 der Windungen 9 der Spiralfeder. Hier ist die SiO₂ - Schicht 20 an der oberen kurzen Seite 24o bis hinunter auf den Kern 16 entfernt. Ebenso kann man die in Figur 8B beschriebene Maskierung 34 entfernen, so dass der Kern 16 freigelegt ist. Durch den mechanischen Schleifprozess wird die Maskierung 34 und ein oberer Teil der SiO₂ - Schicht 20 abgetragen. Ebenso ist es möglich, dass die Oberfläche 35 der Windungen 9 durch ein Abätzen mit Flusssäure (HF) hergestellt wird Diese Ausgestaltung der oberen Randbereiche der Spiralfeder erstreckt sich zumindest entlang des Schwingungsbereichs.

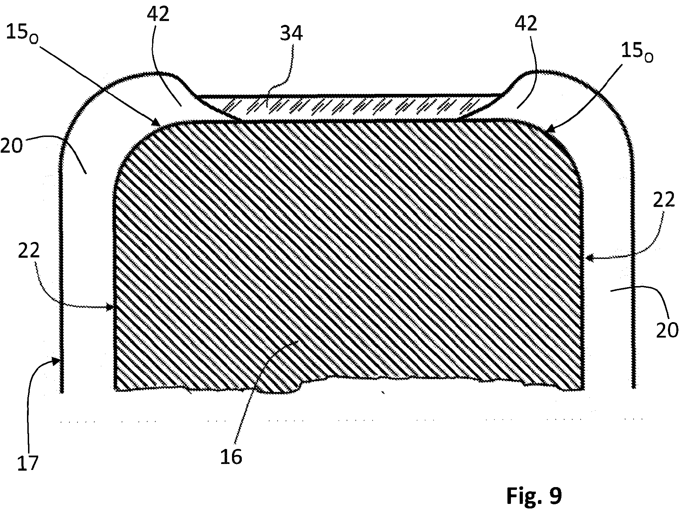

Die **Figur 9** verdeutlicht eine Ausführungsform der Ausgestaltung des Querschnitts 17 der Windungen 9 des Schwingungsbereichs der Spiralfeder 4. Der Kern 16 aus Siliziummaterial trägt auf der durch die kurze Seite 24o definierten Seitenfläche der Windungen 9 eine Maskierung 34. Die Wirkung der Maskierung 34 ist, dass die thermische Oxidation des Siliziummaterials des Kerns 16 und das Aufwachsen der SiO₂ - Schicht 20 im Bereich der Maskierung 34 anders abläuft und somit zu einer anderen Ausbildung der SiO₂ - Schicht 20 führt. Die Maskierung 34 ist eine Diffusionssperre für Sauerstoff. In einer bevorzugten Ausführungsform kann die Maskierung 34 aus Siliziumnitrid bestehen. An den Seitenflächen 22 ist der Kern 16 nicht durch die Maskierung 16 bedeckt und somit für Sauerstoff ungehindert zugänglich. Aufgrund der thermischen Oxidation wächst eine SiO₂ - Schicht 20 auf den Seitenflächen 22 auf, die beidseitig sogenannte "Vogelschnäbel" 42 im Bereich des stetig differenzierbaren oberen Abschnitts 15o ausbilden, die sich unter die Maskierung 34 erstrecken. Die Maskierung 34 wird an den Rändern durch die thermische Oxidation verbraucht.

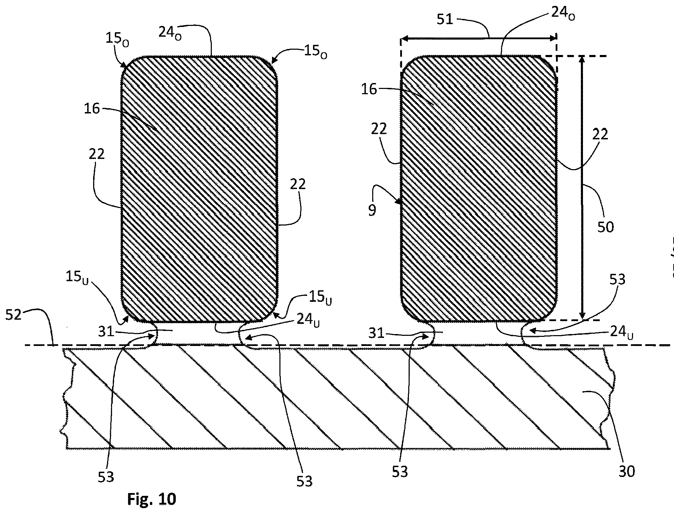

**Figur 10** ist eine schematische vergrößerte Ansicht eines Querschnitts der Windungen 9 der Spiralfeder, die von dem umgebenden Siliziummaterial (hier nicht dargestellt) durch einen Ätzprozess freigelegt und noch mit dem Träger 30 verbunden sind. Bei der hier dargestellten Ausführungsform ist der Träger 30 mit einer Trennschicht 31 versehen. Bevorzugt besteht diese Trennschicht aus SiO₂, dem gleichen Material, das bei der thermischen Oxidation auf den Kern 16 der Windungen 9 aufwächst.

Die aus dem Siliziummaterial 32 (siehe Fig. 6A) durch den Ätzprozess gebildeten Windungen 9 der Spiralfeder 4 haben eine Ätzhöhe 50 und eine Ätzbreite 51 geätzt. Durch das Ätzen werden die Seifenflächen bzw. die langen Seiten 22 der Windungen 9 der Spiralfeder 4 freigelegt. Ebenso werden die oberen, kurzen und geradlinigen Seiten 24o und die unteren, kurzen und geradlinigen Seiten 24u der Windungen 9 gebildet. Die Windungen 9 sind über die unteren, kurzen und geradlinigen Seiten 24u über die verbleibende Trennschicht 31 mit dem Träger 30 verbunden. Der Ätzvorgang der Windungen 9 ist bei dieser Ausführungsform derart gestaltet, dass zwischen jeweils zwei benachbarten Windungen 9 unterhalb eines ursprünglichen Niveaus 52 des Trägers 30 geätzt wird. Ebenso werden bei dem Ätzvorgang Hinterätzungen 53 in der Trennschicht 31 ausgebildet. Auch die stetig differenzierbaren oberen Abschnitte 15o und die stetig differenzierbaren unteren Abschnitte 15u des Kerns 16 der Windungen 9 werden durch den Ätzvorgang gebildet.

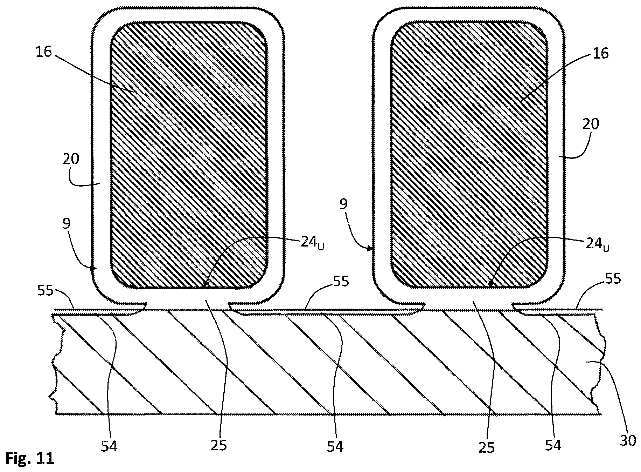

**Figur 11** zeigt die Situation, bei der die Windungen 9 nach dem Ätzvorgang einer thermischen Oxidation für eine vorbestimmte Zeitdauer ausgesetzt waren. Durch die thermische Oxidation bildet sich auf den frei zugänglichen Seitenflächen des Kerns 16 der Windungen 9 eine SiO₂ - Schicht 20 aus. Ebenso erfolgt eine thermische Oxidation des Trägers 30 und die Ablagerung einer Schicht 55 an denjenigen Stellen 54 des Trägers 30, die während des Ätzprozesses freigelegt wurden. Während der thermischen Oxidation wird ein Teil des Siliziummaterials des Kerns 16 in SiO₂ umgewandelt. Der Kern 16 einer jeden Windung 9 ist nun vollkommen von einer SiO₂ - Schicht 20 umgeben. Im Bereich der unteren, kurzen und geradlinigen Seite 24u ist jede Windung 9 über eine SiO₂ - Brücke 25 mit dem Träger 30 verbunden.

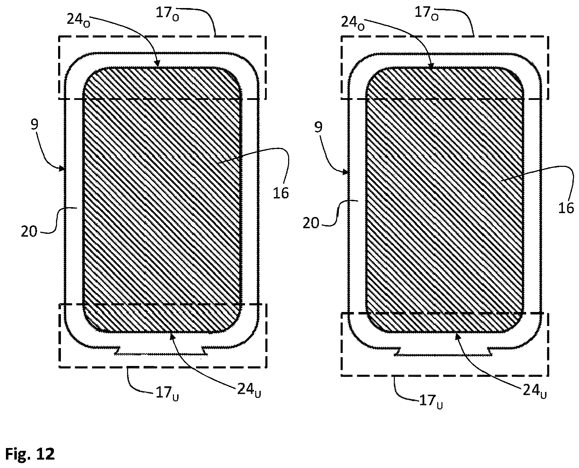

In **Figur 12** ist der abschließende Bearbeitungsschritt zur Herstellung einer Spirale 4 mit mehreren Windungen 9 dargestellt. Der Träger 30 wurde komplett abgetragen (chemisch und/oder mechanisch). Der Kern 16 der Windungen 9, die die Spirale 4 (hier nicht dargestellt) ausmachen, ist bei dieser Ausführungsform komplett mit einer SiO₂ - Schicht 20 umgeben. Bei den Windungen 9, die gemäß dieser Ausführungsform des Verfahrens hergestellt worden sind, unterscheidet sich dessen obere Querschnittsform 17o im Bereich der oberen, kurzen und geradlinigen Seite 24_{O} von dessen unteren Querschnittsform 17u im Bereich der unteren, kurzen und geradlinigen Seite 24u. Der zeichnerisch dargestellte Unterschied der oberen Querschnittsform 17o zwischen der unteren Querschnittsform 17u ist lediglich als Beispiel zu verstehen und soll nicht als eine Beschränkung der Erfindung aufgefasst werden. In Abhängigkeit von den Einstellparametern des Ätzprozesses und den Parametern der sich daran anschließenden thermischen Oxidation, kann das Ausmaß des Unterschieds zwischen der oberen Querschnittsform 17o und der unteren Querschnittsform 17u beeinflusst werden.

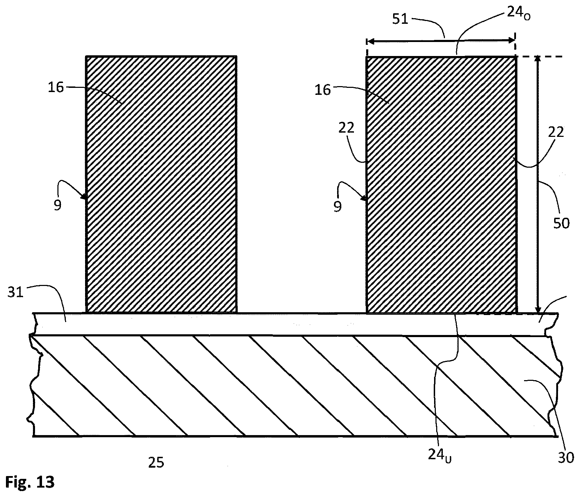

**Figur 13** ist eine schematische vergrößerte Ansicht einer weiteren Ausführungsform des Querschnitts der Windungen 9 der Spiralfeder, die von dem umgebenden Siliziummaterial (hier nicht dargestellt) durch einen Ätzprozess freigelegt und noch mit dem Träger 30 verbunden sind. Bei der hier dargestellten Ausführungsform ist der Träger 30 mit einer Trennschicht 31 versehen. Bevorzugt besteht diese Trennschicht aus SiO₂, dem gleichen Material, das bei der thermischen Oxidation auf den Kern 16 der Windungen 9 aufwächst. Die durch den Ätzprozess gebildeten Windungen 9 der Spiralfeder 4 haben eine Ätzhöhe 50 und eine Ätzbreite 51 geätzt. Durch das Ätzen werden die Seifenflächen bzw. die langen Seiten 22 der Windungen 9 der Spiralfeder 4 freigelegt. Ebenso werden die oberen, kurzen und geradlinigen Seiten 24o und die unteren, kurzen und geradlinigen Seiten 24u der Windungen 9 gebildet. Die Windungen 9 sind über die unteren, kurzen und geradlinigen Seiten 24u über die Trennschicht 31 mit dem Träger 30 verbunden. Die Trennschicht 31 kann aus dem gleichen Material bestehen, wie die Schicht 20 die zur Kompensation des thermischen Ausdehnungskoeffizienten auf mindestens eine Seitenfläche der Windungen 9 der Spiralfeder aufgetragen ist.

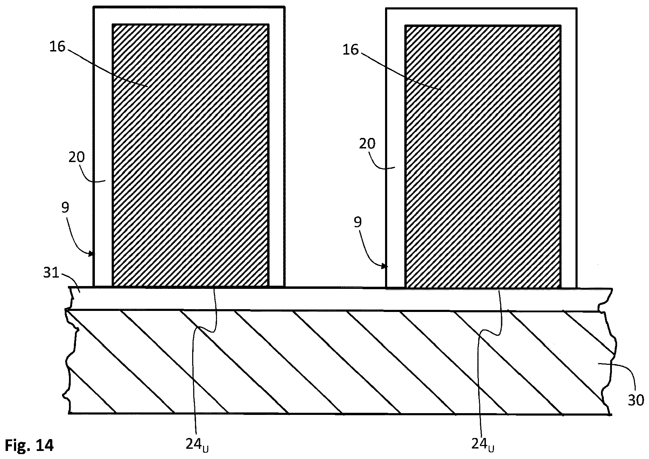

**Figur 14** zeigt die Situation, bei der die Windungen 9 nach dem Ätzvorgang einer thermischen Oxidation für eine vorbestimmte Zeitdauer ausgesetzt waren. Durch die thermische Oxidation bildet sich auf den frei zugänglichen Seitenflächen des Kerns 16 der Windungen 9 z.B. eine SiO₂ - Schicht 20 aus. Während der thermischen Oxidation wird ein Teil des Siliziummaterials des Kerns 16 in SiO₂ umgewandelt. Der Kern 16 einer jeden Windung 9 ist nun an den frei zugänglichen Seitenflächen von einer SiO₂ - Schicht 20 umgeben. Im Bereich der unteren, kurzen und geradlinigen Seite 24u ist jede Windung 9 noch mit dem Träger 30 verbunden.

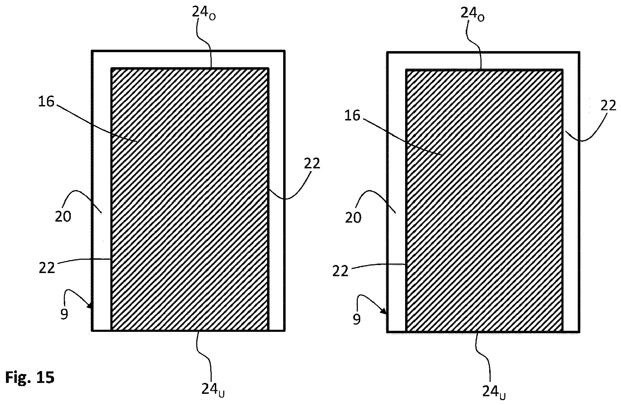

In **Figur 15** ist der abschließende Bearbeitungsschritt zur Herstellung einer Spirale 4 mit mehreren Windungen 9 dargestellt. Der Träger 30 und auch die Trennschicht wurden bei dieser Ausführungsform komplett abgetragen (chemisch und/oder mechanisch). Der Kern 16 der Windungen 9, die die Spirale 4 (hier nicht dargestellt) ausmachen, ist bei dieser Ausführungsform an den durch die langen Seiten 22 und durch die obere, kurze und geradlinige Seite 24o definierten Seitenflächen mit einer SiO₂ - Schicht 20 umgeben. An der durch die untere, kurze und geradlinige Seite 24u definierten Seitenfläche ist keine SiO₂ - Schicht 20 vorhanden, da auch die Trennschicht abgetragen wurde. Ebenso kann in einem weiteren thermischen Oxidationsprozess auch an der unteren, kurzen und geradlinigen Seite 24u eine Oxid-Schicht 20 aufgebracht werden.

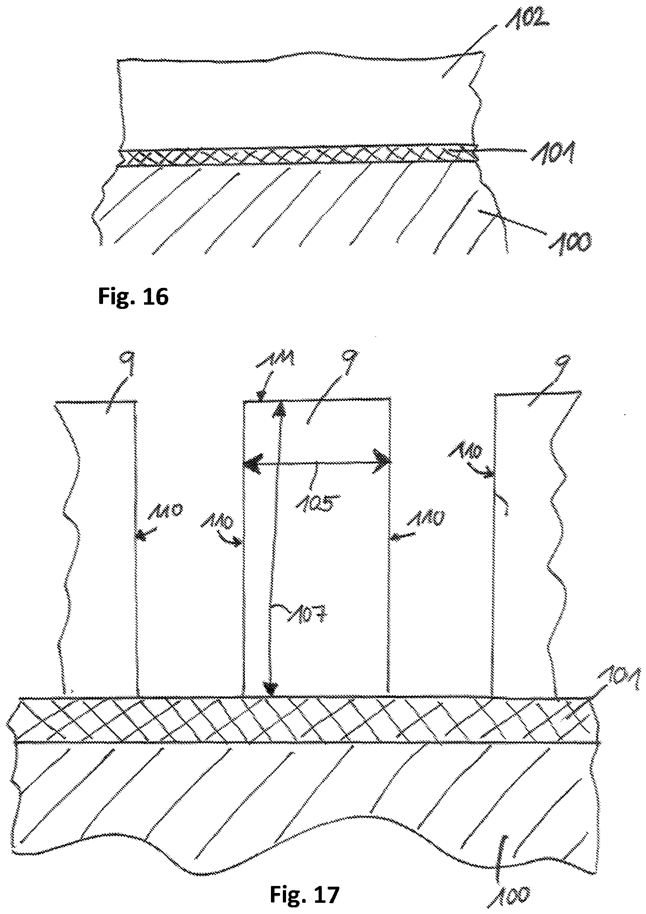

In **Figur 16** bis **Figur 20** wird eine weitere Ausführungsform eines Verfahrens beschrieben, mit dem die Breite der oxidierten Windungen 9 der Spiralfeder 4 genau eingestellt werden kann.

**Figur 16** beschreibt den Aufbau eines Trägers 100, der in dieser Ausführungsform mit einer Trennschicht 101 versehen ist. Auf der Trennschicht 101 wird eine Materialschicht 102 für den Kern 16 der Windungen 9 der Spiralfeder 4 aufgebracht. Wie bereits erwähnt, ist dies nur eine von mehreren möglichen Ausführungsformen der Erfindung und soll folglich nicht als Beschränkung aufgefasst werden.

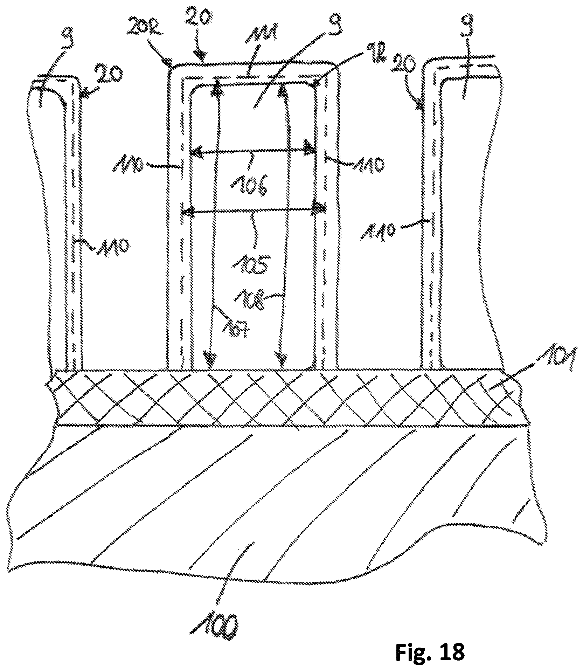

Bei der Darstellung der **Figur 17** sind in der Materialschicht 102 die Windungen 9 der Spiralfeder 4 mit einer Ätzbreite 105 und einer Ätzhöhe 107 geätzt. Durch das Ätzen werden die Seifenflächen 110 bzw. Seitenwände der Windungen 9 der Spiralfeder 4 freigelegt. Die Trennschicht 101 kann als Stoppschicht für den Ätzvorgang der Windungen 9 dienen. Ebenso wird bei dem Ätzvorgang die obere Seitenfläche 111 ausgebildet. **Figur 18** zeigt die Situation, bei der die Windungen 9 nach dem Ätzvorgang für eine vorbestimmte Zeitdauer einer thermischen Oxidation ausgesetzt worden sind. Durch die thermische Oxidation bildet sich auf den beiden frei zugänglichen Seitenflächen 110 und der frei zugänglichen oberen Seitenfläche 111 eine SiO₂ - Schicht 20 aus. Während der thermischen Oxidation wird ein Teil des Siliziummaterials des Kerns 9 in SiO₂ umgewandelt. Die ursprüngliche Ätzbreite 105 einer jeden Windung 9 des Kerns wird dadurch zu einer geringeren Oxidationsbreite 106 des Kerns 16 der Windung 9. Ebenso wird durch die thermische Oxidation die ursprüngliche Ätzhöhe 107 einer Windung 9 auf die Oxidationshöhe 108 reduziert. Durch den Ätzvorgang kann der Kern 9 Verrundungen 9R ausbilden. Folglich bildet auch die eine SiO₂ - Schicht 20 Verrundungen 20R aus.

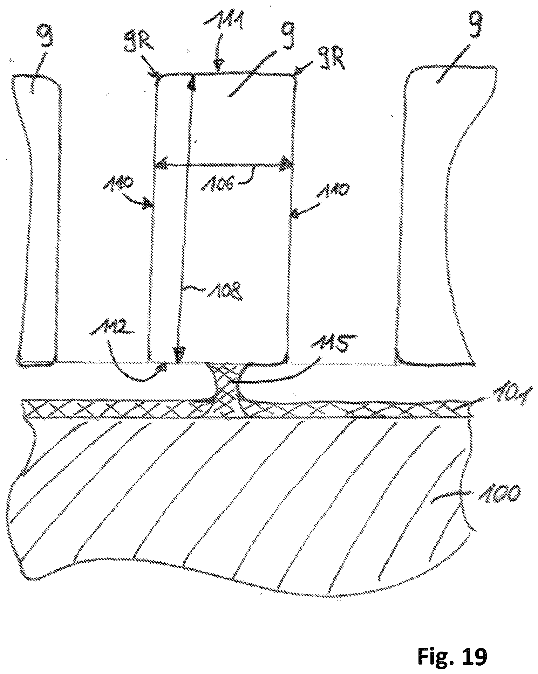

In **Figur 19** ist der nächste Schritt eines weiteren erfindungsgemäßen Verfahrens zur Herstellung einer Spiralfeder 4 graphisch dargestellt. In dem Folgeschritt nach der thermischen Oxidation wird die SiO₂ - Schicht 20 aus Figur18 entfernt. Das Entfernen der SiO₂ - Schicht 20 erfolgt mit Methoden, die einem Fachmann hinlänglich bekannt sind. Beim Entfernen der SiO₂ - Schicht 20 wird auch zumindest ein Teil der Trennschicht 101 abgetragen. Als Resultat erhält man Windungen 9 für die Spiralfeder, die als Abmessung die Oxidationsbreite 106 und die Oxidationshöhe 108 besitzen. Ferner kann aufgrund des zumindest teilweisen Entfernens der Trennschicht 101 zumindest ein Teilbereich der unteren Seitenfläche 112 freigelegt werden und somit zugänglich sein. Das Entfernen der Trennschicht 101 ist dabei derart eingestellt, dass die untere Seitenfläche 112 der Windung über einen Steg 115 der Trennschicht 101 mit dem Träger 100 verbunden ist.

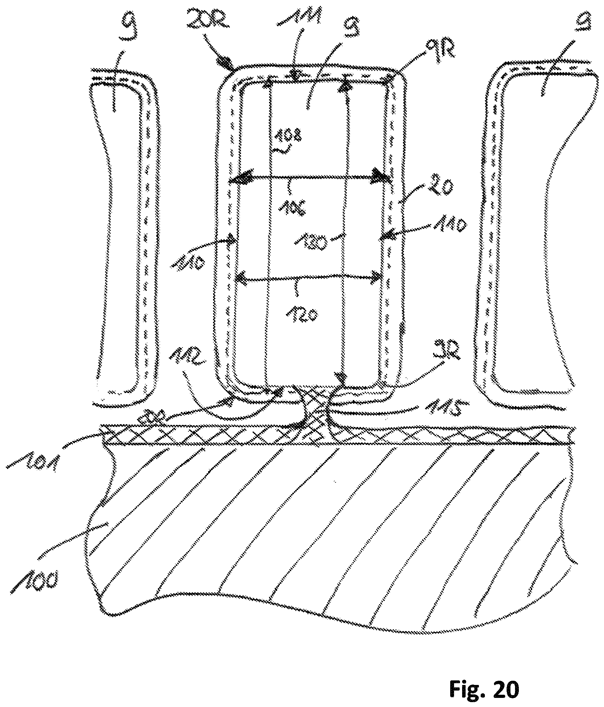

In **Figur 20** ist der abschließende Bearbeitungsschritt der Windungen 9 dargestellt. Der Träger 100, auf dem eine Vielzahl von Spiralen mit ihren Windungen 9 ausgebildet sind, wird einer erneuten thermischen Oxidation unterzogen. Da die Seitenflächen 110, die obere Seitenfläche 111 und zumindest ein Teil der unteren Seitenfläche 112 frei zugänglich sind, wird auf diesen durch die thermische Oxidation eine SiO₂ - Schicht 20 ausgebildet. Wie bereits in der Beschreibung zu Figur 18 erwähnt, wird auch bei dieser thermischen Oxidation ein Teil des Siliziummaterials des Kerns der Windungen 9 in SiO₂ umgewandelt. Es resultiert somit ein Kern der Windung 9 aus Siliziummaterial (z.B. Polysilizium), der eine Breite 120 und eine Höhe 130 besitzt, die kleiner ist als die Oxidationsbreite 106 und die Oxidationshöhe 108. Die Stege 115 halten die Spiralfedern immer noch am Träger 100. Um die Spiralfedern zu lösen, wird der Träger 100 mit herkömmlichen Verfahren entfernt. Die Stege 115 können stehen bleiben oder auch komplett entfernt werden. Die erneute Oxidation hat den Vorteil, dass die Breite 120 und die Höhe 130 der Windungen 9 der Spiralfeder exakt eingestellt werden kann. Somit ist es möglich, die mechanischen Eigenschaften der Spiralfeder auf gewünschte Weise einzustellen.

Die hier beschriebenen Herstellungsverfahren haben den Vorteil, dass Spiralfedern aus Siliziummaterial (z.B. Polysilizium) verzugsfrei hergestellt werden können. Ferner weisen die derart hergestellten Spiralfedern ein dauerhaft ausgezeichnetes Schwingungsverhalten auf und besitzen eine Stabilität und Widerstandsfähigkeit gegen Federbrüche. Hinzu kommt, dass die Spiralfeder auch reproduzierbar hinsichtlich des Schwingungsverhaltens ist, ohne dass dabei die erforderliche Temperaturkompensation vernachlässigt wird.

### Bezugszeichenliste

- 1: Schwingsystem
- 2: Schwungrad
- 2.1: Kreisringabschnitt
- 2.2: Speiche
- 2.3: Nabenabschnitt
- 2.4: Schwungmasse
- 3: Unruhwelle
- 3': Wellenabschnitt
- 3": Wellenabschnitt
- 3.1: oberes freies Ende
- 3.2: unteres freies Ende
- 4: Spiralfeder
- 4.1: Spiralfederbefestigungsabschnitt
- 4.2: Spiralfederendabschnitt
- 4.3: Spiralfederringabschnitt
- 5: Halteanordnung
- 6: Haltearm
- 6.1: inneres Haltearmende
- 6.2: äußeres Haltearmende
- 6.3: Führungsausnehmung
- 7: Halteelement
- 7.1: Grundkörper
- 7.2: Sacklochbohrung
- 7.3: Führungsausnehmung
- 7.11: obere Stirnseite
- 7.12: untere Stirnseite
- 8: Schraube
- 9: Windung
- 9R: Verrundung
- 13: inneres Ende
- 15o: stetig differenzierbarer oberer Abschnitt
- 15u: stetig differenzierbarer unterer Abschnitt
- 16: Kern
- 17: Querschnitt
- 17O: Querschnittsform
- 17U: Querschnittsform
- 20: Schicht, SiO₂ - Schicht
- 20R: Verrundung
- 22: lange Seite
- 24_{O}: obere, kurze und geradlinige Seite
- 24u: untere, kurze und geradlinige Seite
- 25: Brücke, SiO₂ - Brücke
- 30: Träger
- 31: Trennschicht
- 32: Siliziummaterial
- 33: Schicht
- 34: Maskierung
- 35: Oberfläche
- 42: Vogelschnabel
- 50: Ätzhöhe
- 51: Ätzbreite
- 52: ursprüngliches Niveau
- 53: Hinterätzung
- 54: freigelegte Stellen
- 55: Schicht
- 100: Träger
- 101: Trennschicht
- 102: Materialschicht
- 105: Ätzbreite
- 106: Oxidationsbreite
- 107: Ätzhöhe
- 108: Oxidationshöhe
- 110: Seifenflächen
- 111: obere Seitenfläche
- 115: Steg
- 120: Breite
- 130: Höhe
- A: Abstand
- B: Breite
- H: Höhe
- L1: Länge
- L2: Länge
- LA: Schwingungsbereich
- LS: Stabilisierungsbereich
- LHA: Längsachse
- LHE: Längsachse
- UA: Achse

## Patentansprüche

1. Spiralfeder (4) mit mindestens einer Windung (9), die aus einem massiven Kern (16) aus einem Siliziummaterial (32) besteht, wobei der Kern (16) zwei gegenüberliegende, lange, parallele und geradlinige Seiten (22), eine obere kurze und geradlinige Seite (24o) und eine untere kurze und geradlinige Seite (24u), umfasst und wobei der Kern (16) der mindestens einen Windung (9) der Spiralfeder (4) durch einen Ätzprozess ausgebildet ist, **dadurch gekennzeichnet, dass**
der Kern (16) aus einem polykristallinen Siliziummaterial (32) besteht und zumindest die gegenüberliegenden langen Seiten (22) des Kerns (16) von einer SiO₂ - Schicht (20) bedeckt sind.

2. Spiralfeder (4) nach Anspruch 1, wobei die obere kurze und geradlinige Seite (24o) und die gegenüberliegenden langen Seiten (22) von einer SiO₂ - Schicht (20) umschlossen sind.

3. Spiralfeder (4) nach Anspruch 1, wobei die obere kurze und geradlinige Seite (24o) beidseits über jeweils einen stetig differenzierbaren Abschnitt (15o) mit den gegenüberliegenden langen Seiten (22) verbunden ist; und die gegenüberliegenden langen und geradlinigen Seiten (22), die jeweils stetig differenzierbaren oberen Abschnitte (15o), die die obere kurze und geradlinige Seite (24o) beidseits mit den gegenüberliegenden langen und geradlinigen Seiten (22) verbinden, und die obere kurze und geradlinige Seite (24o) von einer SiO₂ - Schicht bedeckt sind.

4. Spiralfeder (4) nach Anspruch 3, wobei die untere kurze und geradlinige Seite (24u) von einer SiO₂ - Schicht (20) bedeckt ist, die sich in der Dicke von der SiO₂ - -Schicht (20) an den gegenüberliegenden langen Seiten (22) und der SiO₂ - Schicht (20) an der oberen, kurzen und geradlinigen Seite (24o) unterscheidet.

5. Spiralfeder (4) nach den vorangehenden Ansprüchen, wobei die Spiralfeder (4) einen Spiralfederbefestigungsabschnitt (4.1), einen Spiralfederendabschnitt (4.2) und mindestens einen dazwischenliegenden Spiralfederringabschnitt (4.3) umfasst.

6. Mechanische Uhr mit einer Spiralfeder (4) nach den Ansprüchen 1 bis 5.

7. Verfahren zur Herstellung einer Spiralfeder (4) aus einem polykristallinen Siliziummaterial, **gekennzeichnet durch** die folgenden Schritte:
a. Bereitstellen eines Trägers (30);
b. Aufbringen des polykristallinen Siliziummaterials (32) auf den Träger (30), wobei das polykristalline Siliziummaterial (32) einen Kern (16) mindestens einer Windung (9) der Spiralfeder bildet;
c. Ätzen der mindestens einen Windung (9) der Spiralfeder (4) aus dem polykristallinen Siliziummaterial (32), so dass der Kern (16) der mindestens einen Windung (9) der Spiralfeder (4) ausgeformt wird, der zwei gegenüberliegende, lange, parallele und geradlinige Seiten (22), eine obere, kurze und geradlinige Seite (24o) und eine untere kurze und geradlinige Seite (24u), die zueinander parallel sind, umfasst;
d. Ausführen einer thermischen Oxidation, wobei eine SiO₂ - Schicht (20) zumindest auf die durch die gegenüberliegenden, langen und geradlinigen Seiten (22) definierten und freigelegten Seitenflächen der Spiralfeder (4) aufwächst; und
e. Entfernen des Trägers (30) vom Siliziummaterial (32).

8. Verfahren nach Anspruch 7, wobei beim Ausführen der thermischen Oxidation die SiO₂ - Schicht (20) auf die durch die langen Seiten (22) definierten und freigelegten Seitenflächen und die durch die obere, kurze und geradlinige Seite (24o) definierte und freigelegte Seitenfläche der Spiralfeder aufwächst.

9. Verfahren nach Anspruch 7, wobei die obere, kurze und geradlinige Seite (24o) beidseits über jeweils einen stetig differenzierbaren oberen Abschnitt (15o) mit den gegenüberliegenden langen Seiten (22) verbunden ist und wobei beim Ausführen der thermischen Oxidation die Schicht (20) des Oxids auf die durch die langen Seiten (22), die stetig differenzierbaren oberen Abschnitte (15o) und die obere, kurze und geradlinige Seite (24o) definierten und freigelegten Seitenflächen aufwächst.

10. Verfahren nach Anspruch 7, wobei die obere, kurze und geradlinige Seite (24o) beidseits über jeweils einen stetig differenzierbaren oberen Abschnitt (15o) mit den gegenüberliegenden langen Seiten (22) verbunden ist und eine untere, kurze und geradlinige Seite (24u) beidseits über jeweils einen stetig differenzierbaren unteren Abschnitt (15u) mit den gegenüberliegenden Seiten (22) verbunden ist und zwischen dem Träger (30) und dem Siliziummaterial (32) für den Kern (16) der mindestens einen Windung (9) der Spiralfeder eine Trennschicht (31) vorgesehen ist und das Ätzen der mindestens einen Windung (9) der Spiralfeder (16) derart ausgeführt wird, dass im Bereich der unteren, kurzen und geradlinigen Seite (24u) des Kerns (16) eine Hinterätzung (53) zumindest in der Trennschicht (31) ausgebildet wird, so dass zumindest der stetig differenzierbare untere Abschnitt (15u), der die gegenüberliegenden langen Seiten (22) jeweils beidseits mit der unteren, kurzen und geradlinige Seite (24u) verbindet, vom Träger (30) beabstandet ist.

11. Verfahren nach Anspruch 10, wobei das Ätzen der mindestens einen Windung (9) der Spiralfeder (16) derart ausgeführt wird, dass unterhalb eines ursprünglichen Niveaus (52) des Trägers (30) geätzt wird.

12. Verfahren nach einem der Ansprüche 7 bis 11, wobei eine Schicht (20) aus einem Material zur Kompensation des thermischen Ausdehnungskoeffizienten des Siliziummaterials des Kerns (16) der Windungen (9) auf die mittels des Ätzprozesses freigelegten Begrenzungsflächen der mindestens einen Windung (9) aufgebracht wird.

13. Verfahren nach Anspruch 12, wobei das Material zur Kompensation des thermischen Ausdehnungskoeffizienten das gleiche Material, wie das der Trennschicht (31) ist.

14. Verfahren nach einem der Ansprüche 12 bis 13, wobei das Material der Schicht zur Kompensation des thermischen Ausdehnungskoeffizienten des Siliziummaterials (32) eine SiO₂ - Schicht ist, die mittels thermischer Oxidation des Siliziummaterials (32) des Kerns (16) gebildet wird.

15. Mechanische Uhr mit einer Spiralfeder (4), die nach dem Verfahren gemäß einem der Ansprüche 10 bis 14 hergestellt ist.
